# EUROPEAN PATENT APPLICATION

(11) **EP 0 864 507 A1**
(43) Date of publication of application: **16.09.1998**
(21) Application number: 98850025.2
(22) Date of filing: 25.02.1998
(51) Int. Cl.: B65D 59/06

(54) **Method and device for closing the end of a pipe**

(30) Priority: 28.02.1997 SE 9700725; 24.10.1997 SE 9703878
(71) Applicant: Lindab AB, 269 82 Bastad (SE)
(72) Inventor: Gustavsson, Bert, 269 93 Bastad (SE); Lorentzson, Per, 511 91 Skene (SE)
(74) Representative: Rostovanyi, Peter

(57) **Abstract**

A plug for closing the end of a pipe is formed from a one-piece, flat blank which is formed to a plug which is inserted into the pipe (20). The blank comprises a first part (2) which in the closed position covers the end opening (19) of the pipe (20), and a second part (12, 13, 15) which in the closed position extends into the pipe (20). The second part has at least one flap (13, 15) which is foldably connected to the first part (2) and which in the closed position is in frictional engagement with the inside surface of the pipe (20).

## Description

### Field of the Invention

The present invention relates to a method and a device for closing the end of a pipe in accordance with the preamble to the appended claims 1 and 13, which is based on the technique disclosed in US-A-5,337,792. The invention is particularly, but not exclusively applicable to pipes for ventilation systems, for instance such circular ducts designated "SR" as shown on p. 35 in the catalogue "Ventilation 96" issued by Lindab AB in 1996.

### Background Art

When storing and transporting ventilation pipes, it is in many cases necessary that they be closed at each end to prevent dust and other impurities from entering the pipes. At present there are two prevailing methods for such closing of the ends of ventilation pipes. For small pipe diameters, the pipe ends are closed by means of special plastic covers, and for large pipe diameters, the pipe ends are closed by fastening a plastic bag on the outside of the pipe end.

These solutions for the closing of pipe ends are described on p. 2 (alternative 3) in the brochure "Lackat och lockat" (in English: "Painted and Covered") issued by Lindab AB in 1996. A photo in the above-mentioned passage of the brochure shows how plastic covers are mounted in the end of stored ventilation pipes. The plastic cover, the outer shape of which corresponds to the inner diameter of the pipe, is pressed into the pipe end and held by frictional engagement between the circumferential surface of the plastic cover and the inside surface of the pipe. However, these plastic covers suffer from a number of drawbacks as will be explained below.

The fit of the plastic covers to the pipe end is critical, and in practice it frequently happens that the covers come loose and fall down from the pipe end while the pipe is handled.

Moreover the plastic covers are sensitive to cold, and since their diameters decrease somewhat when their temperature decreases the covers may easily come loose from the pipe end when exposed to temperature variation.

A further inconvenience is that the plastic cover has a circumferential flange, which easily gets caught on other pipes, whereby the cover may come loose from the pipe.

The plastic covers must be attached manually by being driven into the pipe end by means of a mallet. It is therefore difficult to automate the closing of pipes.

Finally, the plastic covers are relatively expensive to manufacture and are considered to be environmentally unfriendly.

The other prior-art closing alternative using a plastic bag has additional drawbacks since the plastic bags are readily torn, and may contribute to formation of condensation inside the pipe.

Relevant background art also includes the pipe closing device according to the reference US-A-5,337,792 mentioned by way of introduction. This known device comprises a flat blank of board, which is formed with an array of tabs for engaging the inside surface of the pipe and which is formable to a plug element positioned a distance into the pipe. The tabs extend outwards from the pipe, and there are a number of larger tabs that are folded round the end edge of the pipe and fixed by means of special clips for holding the plug element inside the pipe. The handling of these loose clips involves obvious drawbacks. Further it is a drawback that the plug element must be spaced from the pipe end since dirt is readily collected in the outermost part of the pipe. This prior-art pipe closure is therefore no competitive alternative to the pipe closures (plastic cover and plastic bag) mentioned above.

There is thus a need of a new type of closure device for such ventilation pipes or similar pipes where it is desirable to close the pipe ends.

### Summary of the Invention

The object of the invention is to indicate a solution to the above problems by providing an improved closure of pipe ends.

According to the invention, this object is now achieved by a device, which is of the type described by way of introduction and which has the features stated in claim 1 with preferred embodiments stated in claims 2-12. The object is also achieved by a method according to the appended claim 13 with preferred variants defined in claims 14-15.

The invention is based on the idea that a blank is folded to form a plug which in its entirety is inserted into the pipe from the end thereof. This solution confers many advantages, of which a few will now be described.

By the plug devices being storable in the form of flat blanks before mounting in the pipes, a much smaller storage space is required compared with the prior-art plastic covers. Furthermore, the closing operation is very easy to carry out and therefore is suited to be automated. It is estimated that the closure solution suggested according to the invention implies that the total cost can be reduced by about 50% compared with the alternative involving a plastic cover.

Thanks to the flaps of the plug abutting against each other inside the pipe, an excellent resilient effect towards the inside surface of the pipe is achieved, which facilitates maintenance of the frictional engagement.

According to a preferred embodiment, the flat blank, from which the plug is formed, consists of corrugated fibreboard which is a more environmentally friendly alternative than the existing plastic covers and plastic bags.

A special advantage is that there are no parts of the plug protruding from the pipe.

### Brief Description of the Drawings

The invention will now be described in more detail with reference to the accompanying schematic drawings, which for the purpose of exemplification show the currently preferred embodiments of the invention.

Fig. 1 shows a flat blank according to a first embodiment.

Fig. 2 shows a plug formed from the blank illustrated in Fig. 1.

Figs 3-5 show how the plug illustrated in Fig. 2 is inserted into a pipe.

Fig. 6 shows how the plug is removed from the pipe.

Fig. 7 is a view corresponding to Fig. 1 of a flat blank according to a second embodiment.

Figs 8 and 9 are two oblique perspective views of a plug formed from the blank illustrated in Fig. 7.

### Description of Preferred Embodiments

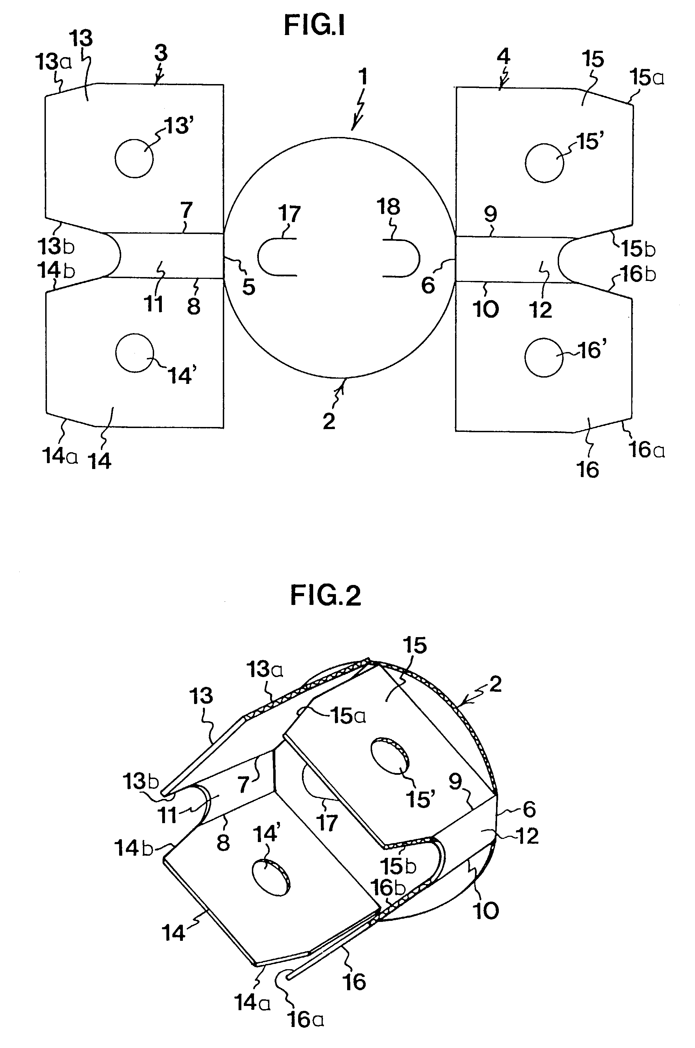

Fig. 1 shows a blank, generally designated 1, which is made in one piece and which preferably consists of corrugated fibreboard. The preferably flat blank 1 comprises a first part constituting a central portion 2 of the blank, and a second part consisting of two projecting flaps 3 and 4. The two flaps 3, 4 are diametrically opposed in respect of the central portion 2 and are foldably connected thereto via first fold lines 5, 6.

Each flap 3, 4 has two parallel fold lines 7, 8 and 9, 10, respectively, which in the flat state of the blank 1 extend away from the central portion 2 and which between themselves define two areas 11, 12, which will be described in more detail below. The second fold lines 7, 8 and 9, 10, respectively, divide each flap 3, 4 into two flap areas or flap portions 13, 14 and 15, 16, respectively. Each flap area 13-16 has a central opening 13'-16', by means of which the blank 1 can readily be gripped in its flat state.

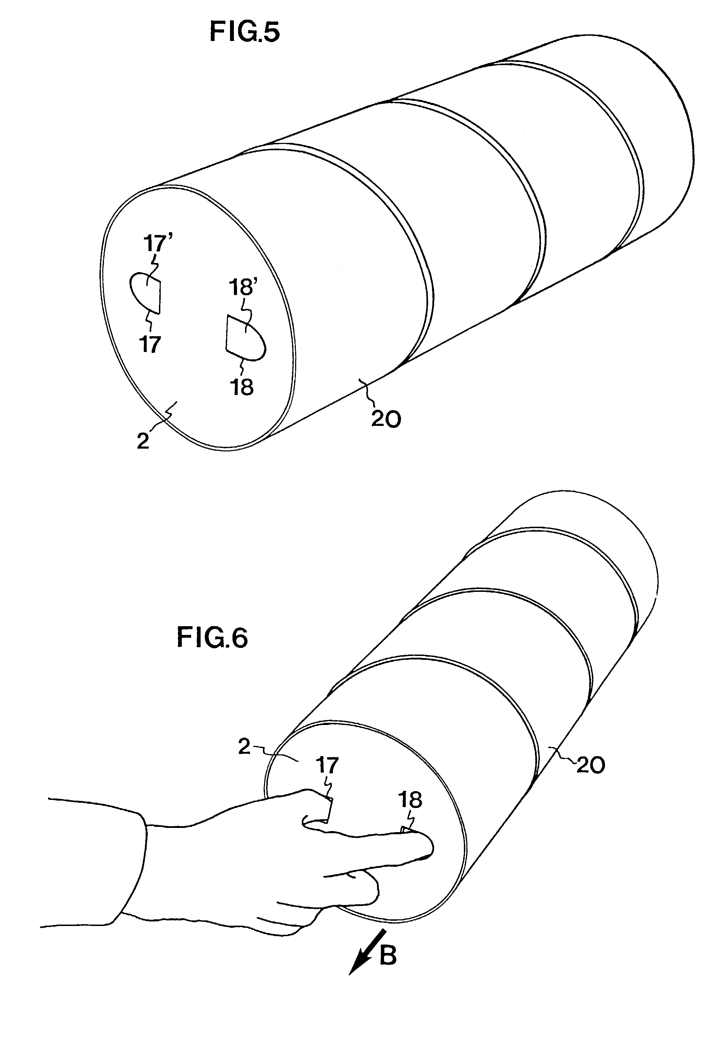

Furthermore, the central portion 2 has two spaced-apart U-shaped punches 17, 18 through the material, which will be described in more detail below. The central portion 2 of the blank 1 has a cross-sectional shape corresponding to the cross-sectional shape of the pipe end which is to be closed (see Fig. 5).

Fig. 2 is a perspective view showing how the blank 1 illustrated in Fig. 1 is formed to a closure means or plug element, in the following referred to as a plug. The two flaps 3 and 4 are folded along the fold lines 5, 6 until the two areas 11 and 12 extend essentially perpendicular to the plane of the central portion 2. After that or simultaneously, the flap portions 13, 14 and 15, 16, respectively, are folded towards each other along the fold lines 7, 8 and 9, 10, respectively. After this forming of the blank 1, the plug is ready to be inserted into the pipe end that is to be closed.

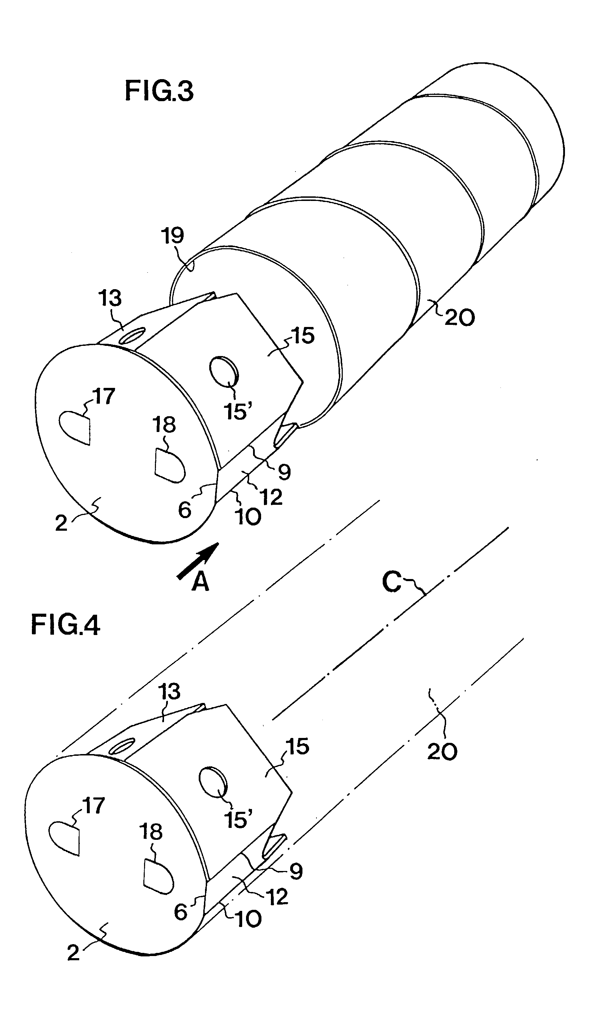

Fig. 3 shows how the formed plug is inserted in the direction of arrow A into an opening 19 in the end of a pipe 20. The joined flap portions 13-16 give the plug a cross-sectional shape which approaches the cross-sectional shape of the pipe 20 at the end thereof.

Fig. 4, in which the pipe 20 is indicated by dash-dotted lines, illustrates how the plug is inserted into the pipe 20. The flap portions 13-16 thus extend into the pipe 20 and are in frictional engagement with the inside surface thereof for safe holding of the plug. The flap portions 13-16 are preferably resilient towards the inside surface of the pipe 20 with a view to improving the frictional engagement. The flap portions 13-16 cooperate by abutting against each other and jointly producing a resilient effect towards the inside surface of the pipe 20.

At least some of the edge portions of the flap portions 13-16 extend along and engage with the inside surface of the pipe 20. The opposite edge portions of the flap portions 13, 15 shown in Fig. 4 thus advantageously engage with the inside surface of the pipe 20. Moreover, the fold lines of the flaps 3, 4 (see the fold lines 9 and 10 in Fig. 4) extend in the closed position along the inside surface of the pipe 20.

The flap area 12 positioned between the fold lines 9, 10 is advantageously in frictional engagement with the inside surface of the pipe 20, and the same applies to the flap area 11, which however is not to be seen in Fig. 4. The flap portions 13-16 of the flaps 3, 4 extending into the pipe 20, and the associated edges and wall portions thus enhance the frictional engagement of the plug with the inside surface of the pipe 20. It is also evident from Fig. 4 that the central portion 2 of the blank 1 in the closed position covers the end opening 19 of the pipe 20 for safe closing, see also Fig. 5.

Referring to Figs 5 and 6, when the plug is to be removed from the pipe 20, the two tongues 17', 18' of material, which are defined by the punches 17, 18, are pressed inwards, thereby forming gripping openings in the central portion 2 of the plug. The plug can then easily be withdrawn from the pipe 20 in the direction of arrow B.

Normally, the plug is inserted into the pipe 20 only so far that the central portion 2 is essentially on a level with the actual pipe opening 19. However, it goes without saying that it is quite possible to insert the plug somewhat further into the pipe 20, such that the central portion 2 is located a small distance from the pipe opening 19.

According to the invention, the closing of the pipe end thus is effected in the following steps: (a) forming a blank 1 comprising a first part 2 and a second part to a plug, the second part having projecting flaps 3, 4, which are foldably connected to the first part 2; (b) inserting the plug into the pipe 20 such that the first part 2 of the blank 1 covers the end opening 19 of the pipe 20; and (c) making the flaps 3, 4 of the second part, during this insertion, frictionally engage the inside surface of the pipe 20, the flaps 3, 4 being made to extend into the pipe 20 and abut against each other resiliently towards the inside surface of the pipe 20.

When inserting the plug into the pipe 20, it is advantageous that the cross-sectional dimensions of the plug in the inner end are smaller than the cross-sectional dimensions in the outer end of the plug adjacent to the central portion 2. It is desirable that the plug "tries to enter" the pipe 20. This is achieved by the corner portions 13a, 13b, 14a, 14b, 15a, 15b, 16a, 16b of the flap portions 13-16 (see Fig. 1) being bevelled. The corner portions are made to lie opposite each other during the forming of the plug, which essentially facilitates the insertion (see e.g. the corner portions 13a, 15a and 13b, 14b in Fig. 2).

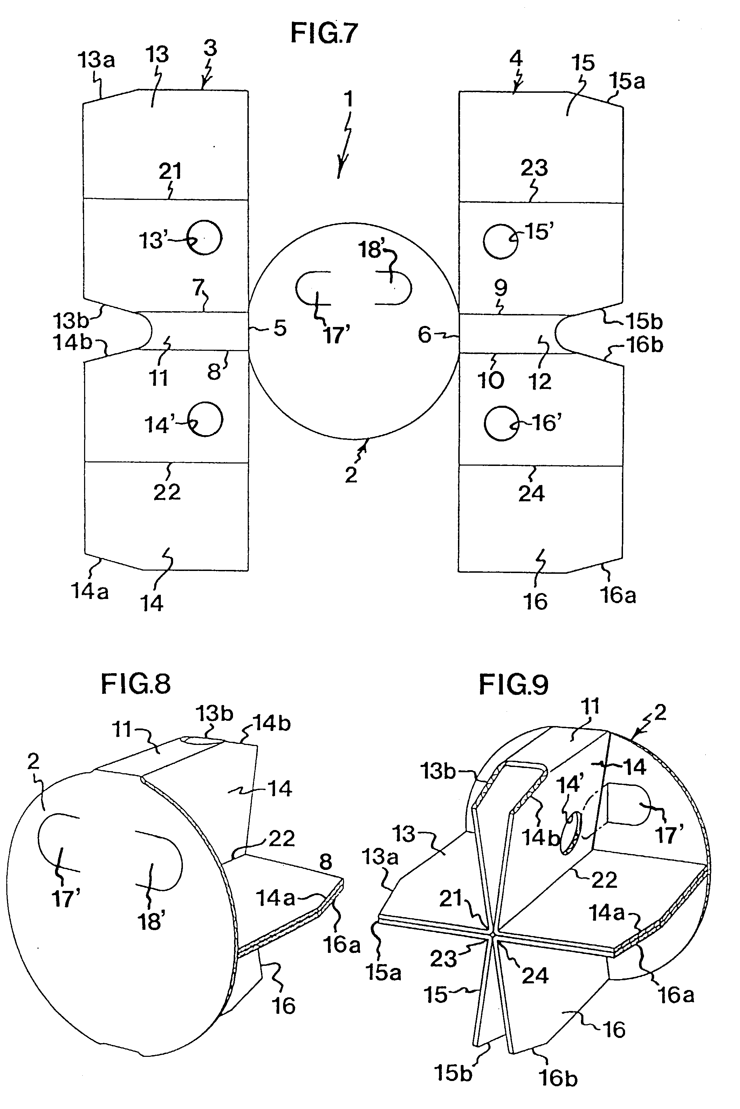

Figs 7-9 illustrate the second embodiment of the invention, in which parts that are also to be found in the first embodiment have the same reference numerals. Each flap portion 13-16 has a further fold line 21-24 which divides the respective flap portions. The fold lines 21-24 are parallel with the above-described fold lines 7-10 of the flaps 3, 4 and permit folding of the blank 1 to the shape of the closure means or plug shown in Figs 8-9.

The flap portions 13-16 are folded to V shape and their pointed ends are placed against each other along the fold lines 21-24. By the flap portions 13-16 abutting against each other in this manner at a distance from the inner wall of the pipe 20, an excellent resilient effect towards the same is achieved via the positions (for instance at 11 and 12) where the plug engages the inside surface of the pipe 20. The flaps 3, 4 are pressed against the inside surface of the pipe 20 via the surfaces and edge portions which engage therewith, thereby enhancing the frictional engagement.

The cruciform cross-section of the plug has given excellent results in practical tests. The pointed ends of the V-shaped flap portions 13-16 preferably abut against each other in the area of the centre axis C of the pipe 20 (cf. Fig. 4). In this position, the fold lines 21-24 are essentially parallel with said centre axis C. Furthermore, the V-shaped flap portions 13-16 abut against the "inside surface" of the central portion 2 (see Fig. 9). The closure device according to the second embodiment is used in the same manner as the device according to the first embodiment. The blank 1 is formed to the plug, which has V-shaped flap portions 13-16 and which is inserted into the pipe 20.

In the second embodiment, the U-shaped punches 17, 18 are, however, arranged in a slightly different manner compared with the first embodiment. As shown in Fig. 7, the tongues 17', 18' are arranged at a distance from and parallel with an imaginary centre line extending through the circular portion 2 of the flat blank 1 between the two opposite areas 11 and 12. When the plug has been formed (Fig. 9), the tongues 17', 18' can be folded towards the neighbouring opening 14' (13') in the flaps 14 and 13, as indicated by a dash-dotted line. As a result, the user can insert his fingers and reach the openings 14' (13') for safe gripping (cf. Fig. 6).

As mentioned above, the invention is applicable to other pipes than ventilation ducts; for instance, the device according to the invention can be used to close pipe ends of pipe bends, T pipes etc, possibly included in other pipe systems than ventilation plants. Of course, it will also be appreciated that other materials than corrugated fibreboard can be used for the forming of the closure device. It is preferred that the flat blank has a suitable rigidity and is of such a character that the flaps advantageously have a resilient effect towards the inside surface of the pipe.

The cross-sectional shape of the pipe at the end is not critical, and pipes of oval cross-section, rectangular cross-section etc. can advantageously be closed by means of a device according to the invention. The essential thing is that the part of the formed blank which is to cover the pipe opening performs in such a manner that a reliable closing is established.

Finally, it should be emphasised that the inventive concept is in no way limited to the embodiments described above, and several modifications are feasible within the scope of the appended claims. For instance, a different number of flaps can be used, and the design of the flaps can also be different. The important thing is that an appropriate frictional engagement is provided inside the pipe.

## Claims

1. A device for closing the end of a pipe, comprising a plug formed from a flat blank (1) having a first part (2) which in the closed position covers the end opening (19) of the pipe (20), and a second part with projecting flaps (3, 4) which are foldably connected to the first part (2) and which in the closed position are in frictional engagement with the inside surface of the pipe (20), **characterised** in that the flaps (3, 4) in the closed position extend into the pipe (20), and that the flaps (3, 4) in this position abut against each other and, thus, act resiliently towards the inside surface of the pipe (20) for facilitating maintenance of said frictional engagement.

2. A device as claimed in claim 1, wherein said first part of the blank (1) is a central portion (2) thereof, the flaps (3, 4) projecting diametrically from said central portion (2).

3. A device as claimed in claim 1 or 2, wherein the flaps (3, 4) have edge portions (11, 12) which in the closed position extend along and engage with the inside surface of the pipe (20).

4. A device as claimed in any one of the preceding claims, wherein the plug (2-16) has a cross-sectional shape which approximates the cross-sectional shape of the pipe (20) at the end.

5. A device as claimed in any one of the preceding claims, wherein the cross-sectional dimensions of the plug (2-16) at a first end which is to be inserted into the pipe (20) prior to a second end and which connects with the first part (2) of the blank (1), are smaller than at said second end.

6. A device as claimed in any one of the preceding claims, wherein the first part (2) of the blank (1) has a cross-sectional shape corresponding to the cross-sectional shape of the pipe (20) at the end.

7. A device as claimed in any one of the preceding claims, wherein the flaps (3, 4) are connected to said first part (2) of the blank (1) via a first fold line (5, 6).

8. A device as claimed in any one of the preceding claims, wherein there are two flaps (3, 4) which are diametrically arranged on opposite edge portions of the first part (2) of the blank (1) and which have additional fold lines (7-10, 21-24) which permit folding of each flap (3, 4) into two V-shaped flap portions (13-16), the pointed ends of which abut against each other in the area of the centre axis (C) of the pipe (20) in said closed position.

9. A device as claimed in claim 8, wherein the V-shaped flap portions (13-16) give the plug (2-16) an essentially cruciform cross-section.

10. A device as claimed in any one of the preceding claims, wherein the first part (2) of the blank (1) has at least one punch (17, 18) which permits folding of a tongue (17', 18') from the blank (1) for forming a gripping opening therein.

11. A device as claimed in any one of the preceding claims, wherein the blank (1) consists of corrugated fibreboard.

12. A device as claimed in any one of the preceding claims, wherein the plug is formed from one-piece material.

13. A method of closing the end of a pipe, comprising the steps of forming a plug from a flat blank (1) having a first part (2) and a second part, said second part including projecting flaps (3, 4), which are foldably connected to the first part (2); inserting the plug (2-16) into the pipe (20) such that the first part (2) of the blank (1) covers the end opening (19) of the pipe (20); and making the flaps (3, 4) of the second part, during said insertion, frictionally engage with the inside surface of the pipe (20), **characterised** in that the flaps (3, 4) in the closed position are made to extend into the pipe (20) and that, in this position, the flaps (3, 4) are made to abut against each other resiliently towards the inside surface of the pipe (20) for facilitating maintenance of said frictional engagement.

14. A method as claimed in claim 13, further including the step of forming the plug such that its cross-sectional dimensions at that end which is inserted into the pipe (20) are smaller than at that end of the plug which connects with the first part (2) of the blank (1).

15. A method as claimed in claim 13 or 14, further including the step of folding said flaps against each other in such a manner that the plug (2-16) is given an essentially cruciform cross-section.
